# EUROPÄISCHE PATENTSCHRIFT

(11) **EP 0 531 340 B1**
(45) Veröffentlichungstag und Bekanntmachung des Hinweises auf die Patenterteilung: **04.09.1996**
(21) Anmeldenummer: 91909459.9
(22) Anmeldetag: 17.05.1991
(51) Int. Cl.: H04N 17/04, H04N 9/28

(54) **EINRICHTUNG ZUR RASTERKORREKTUR IN EINEM FERNSEHGERÄT**
GRID CORRECTION DEVICE FOR A TELEVISION SET
DISPOSITIF CORRECTEUR DE TRAME POUR POSTES DE TELEVISION

(30) Priorität: 25.05.1990 DE 4016886
(43) Veröffentlichungstag der Anmeldung: 17.03.1993
(73) Patentinhaber: Deutsche Thomson-Brandt GmbH, 78003 Villingen-Schwenningen (DE)
(72) Erfinder: GLEIM, Günter, D-7730 Villingen 22 (DE); CHAUVIN, Jacques, D-7733 Mönchweiler (DE)
(74) Vertreter: Einsel, Robert, Dipl.-Ing.
(86) Internationale Anmeldenummer: EP9100926
(87) Internationale Veröffentlichungsnummer: WO9119401

(56) Entgegenhaltungen:
- EP-A- 0 069 554
- EP-A- 0 194 944
- PATENT ABSTRACTS OF JAPAN, Band 8, Nr. 49 (E-230)[1486], 6. März 1984, & JP-A-58 201 486

## Beschreibung

Die Erfindung geht aus von einem Verfahren zur Rasterkorrektur in einem Fernsehgerät. Für die Rasterkorrektur ist es bekannt, auf dem Bildschirm durch Kreuzungspunkte eines Gittermusters aus horizontalen und vertikalen Linien räumliche Bildpunkte zu definieren. Für diese Bildpunkte werden Korrekturwerte ermittelt und in Speichern abgelegt. Bei der Wiedergabe werden diese Korrekturwerte bei der rasterweisen Ablenkung nacheinander abgerufen und zur Korrektur von Ablenkparametern, insbesondere der Konvergenz, nacheinander der Bildröhre zugeführt.

Bei Betriebsarten mit unterschiedlicher Vertikalablenkamplitude, einer sogenannten Überabtastung oder overscanning, verschieben sich die durch das Gittermuster definierten Bildpunkte auf dem Bildschirm. Da ein Korrekturwert nur für einen bestimmten räumlichen Bildpunkt gilt, wären für die einzelnen Betriebsarten getrennte Speicher erforderlich. Es wurde daher vorgeschlagen (EP-A-0 500 567), bei Betriebsarten mit unterschiedlicher Ablenkamplitude die zeitliche Lage der die Linien des Gittermusters erzeugenden Steuerimpulse jeweils so zu ändern, daß die Kreuzungspunkte bei den unterschiedlichen Betriebsarten immer an denselben räumlichen Stellen der Bildfläche liegen. Es kann dann für alle Betriebsarten derselbe Speicher mit denselben Korrekturwerten verwendet werden.

Aus Patent Abstracts of Japan, vol. 8, No. 49 (E-230) (1486) 06.03.84 & JP-A-58 201 486 ist eine Einrichtung zur Rasterkorrektur in einem Fernsehgerät bekannt,die eine Korrektur der Konvergenz insbesondere in den Randbereichen des Bildes bewirkt. Hier wird ebenfalls ein zweites Gittermuster erzeugt, das durch Überlagerung mit dem ersten Gitterraster die Korrektur bewirkt.

Es hat sich gezeigt, daß abhängig von der jeweiligen Betriebsart und von der Amplitude der Vertikalablenkung noch toleranzbedingte Abweichungen in der räumlichen Lage der Bildpunkte auf dem Bildschirm auftreten. Die Lage der Kreuzungspunkte des Gittermusters weicht also von der für alle Betriebsarten an sich gleichen Sollage ab. Die für die Korrektur verwendeten Korrekturwerte hätten dann nicht mehr den richtigen Wert.

Der Erfindung liegt die Aufgabe zugrunde, derartige toleranzbedingte Abweichungen in der räumlichen Lage der Kreuzungspunkte bei unterschiedlichen Betriebsarten auszugleichen.

Diese Aufgabe wird durch die im Anspruch 1 angegebene Erfindung gelöst. Vorteilhafte Weiterbildungen der Erfindung sind in den abhängigen Patentansprüchen angegeben.

Die Erfindung beruht auf folgender Überlegung: Die toleranzbedingten Abweichungen in der räumlichen Lage der Kreuzungspunkte entstehen insbesondere dadurch, daß der Elektronenstrahl außerhalb der sichtbaren Bildfläche in einen Bereich mit nichtlinearer Ablenkung gerät. Die Abweichungen in der räumlichen Lage der Bildpunkte auf der sichtbaren Bildfläche entstehen daher durch eine mehr oder weniger lange Vorgeschichte der Ablenkung bei Beginn des eigentlichen Bildes. Diese Abweichungen werden nun dadurch beseitigt, daß jeweils bei Bildbeginn, also im Bereich des oberen Bildrandes, während einer Zeile der bereits vorhandene Korrekturwert für den Parameter im Sinne einer Nachkorrektur auf einen anderen Wert gebracht wird, also die Gesamtkorrektur mit einem anderen Wert erfolgt, derart, daß bei allen Betriebsarten an dieser räumlichen Stelle gleiche Startbedingungen geschaffen werden, d.h. die Ablenkung jeweils unabhängig von der Vorgeschichte auf ihren Sollwert eingestellt wird. Es werden also bei Beginn des sichtbaren Bildes gleiche Startpunkte bei allen Betriebsarten geschaffen. Es erfolgt somit eine Kompensation der je nach Betriebsart unterschiedlichen Vorgeschichte in der Ablenkung vor Beginn des sichtbaren Bildes. Der Aufwand besteht nur darin, daß getrennt für jede Betriebsart für eine Zeile zusätzliche Werte gespeichert werden. Die durch diese Werte bewirkte Korrektur gewährleistet dann, daß die Kreuzungspunkte bei allen Betriebsarten ihre Sollage auf dem Bildschirm haben. Eine Abweichung während der sichtbaren Bildfläche selbst erfolgt nicht mehr, weil innerhalb dieses Bereiches die Ablenkung weitestgehend linear ist. Durch die Erfindung wird also erreicht, das der Vorteil der gleichen räumlichen Lage der Bildpunkte auch bei Betriebsarten mit stark unterschiedlicher Ablenkamplitude erhalten bleibt und voll ausgeschöpft werden kann.

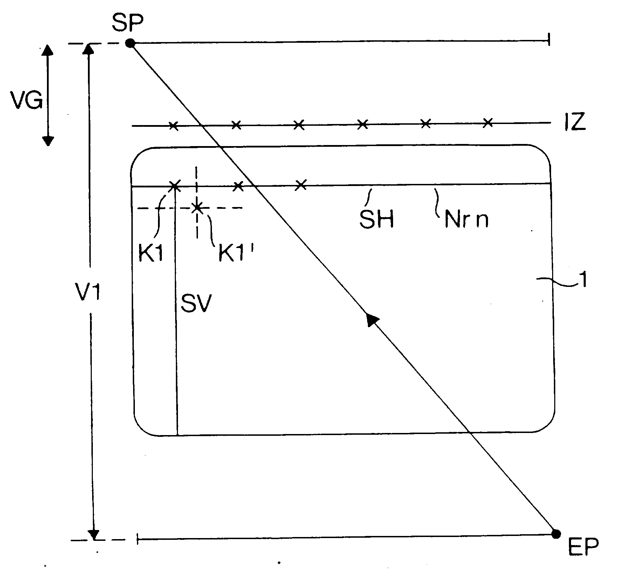

Die Erfindung wird im folgenden anhand der Zeichnung erläutert.

Die Figur zeigt die sichtbare Bildfläche 1, auf der ein Fernsehbild dargestellt wird. Die Ablenkung des Elektronenstrahls erstreckt sich jedoch im Sinne einer Überabtastung oder eines sogenannten overscanning zwischen dem Startpunkt SP und dem Endpunkt EP. Eine derartige Vertikalablenkung wird z.B. dann angewendet, wenn ein Fernsehsignal mit einem Breitbandbild mit schwarzen Balken am oberen und unteren Bildrand ohne diese schwarzen Balken dargestellt werden soll. Durch eine der jeweiligen Betriebsart angepaßte Änderung der zeitlichen Lage der Steuerimpulse für die waagerechten Linien SH und die vertikalen Linien SV eines Gittermusters ist sichergestellt, daß eine bestimmte Gitterlinie (n) immer an der dargestellten räumlichen Stelle der Bildfläche 1 liegt und der Kreuzungspunkt K1 dieser Linie die dargestellte räumliche Lage hat. Bedingt durch Toleranzen, insbesondere eine nichtlineare Ablenkung des Elektronenstrahls oberhalb der Bildfläche 1, ist der Kreuzungspunkt K1 in die dargestellte Lage K1' verschoben.

Während der Initialisierungszeile IZ im Bereich des oberen Bildrandes kurz vor Beginn des eigentlichen Bildes, werden nun einzeln für jede Betriebsart Korrekturwerte gespeichert. Diese Korrekturwerte bewirken, daß die zwischen dem Startpunkt SP und dem Beginn der Abtastung der Bildfläche 1 während der Vorgeschichte VG der Ablenkung durch Toleranzen und nichtlineare Ablenkung entstandenen Abweichungen ausgeglichen werden. Unabhängig von dieser Vorgeschichte in der Ablenkung werden also immer gleiche Startbedingungen geschaffen, derart, daß z.B. der Kreuzungspunkt K1 die dargestellte Sollage auf der Bildfläche 1 einnimmt. Dann ist sichergestellt, daß auch während der ganzen Bildfläche 1 alle Kreuzungspunkte K ihre Sollage auf dem Bildschirm haben, da die Ablenkung während der Bildfläche 1 weitestgehend linear ist.

Für jede Betriebsart ist ein Speicher mit den individuellen Korrekturwerten für die Initialisierungszeile (IZ) vorgesehen.

## Patentansprüche

1. Verfahren zur Rasterkorrektur in einem Fernsehgerät, bei dem für Kreuzungspunkte (K) eines Gittermusters aus horizontalen und vertikalen Linien (SH, SV) in Speichern Korrekturwerte abgelegt werden, wobei für verschiedene Betriebsarten mit unterschiedlichen Bildformaten und Vertikalablenkamplituden die Kreuzungspunkte (K) an denselben definierten räumlichen Stellen der sichtbaren Bildfläche (1) liegen, **dadurch gekennzeichnet**,
daß jeweils individuell für eine Betriebsart während einer Initialisierungszeile (IZ) in einem Bereich um den oberen Bildrand der sichtbaren Bildfläche (1) Korrekturwerte für die Ablenkung ermittelt und in einem Speicher abgelegt werden,
und daß mit diesen Korrekturwerten die bei den einzelnen Betriebsarten unterschiedlichen Abweichungen der Kreuzungspunkte (K) von der definierten räumlichen Lage auf der sichtbaren Bildfläche (1) ausgeglichen werden.

2. Verfahren nach Anspruch 1, **dadurch gekennzeichnet**, daß die Initialisierungszeile (IZ) in Vertikalablenkrichtung kurz vor Beginn des sichtbaren Bildes liegt.

3. Verfahren nach Anspruch 2, **dadurch gekennzeichnet**, daß die Initialisierungszeile (IZ) bei der in Vertikalablenkrichtung gesehen letzten Gitterlinie des Gittermusters oberhalb der sichtbaren Bildfläche (1) liegt.

4. Verfahren nach Anspruch 1, 2 oder 3, **dadurch gekennzeichnet**, daß die Korrekturwerte für die Initialisierungszeile (IZ) für jede Betriebsart in einem individuellen Speicher abgespeichert werden.

## Claims

1. Method of correcting the raster in a television apparatus in which correcting values are stored in stores for the points of intersection (K) of a grid pattern consisting of horizontal and vertical lines (SH, SV), wherein the points of intersection (K) are located at the same defined spatially localised positions of the visible image area (1) for different modes of operation having differing image formats and vertical deflection amplitudes, characterised in that,
correcting values for the deflection are determined during an initialising line (IZ) in a region at the upper edge of the picture of the visible image area (1) and the values are stored in a store individually for each one operating mode,
and that the differing deviations of the points of intersection (K) from the defined spatial positions on the visible image area (1) occurring in the individual operating modes are compensated for by using these correcting values.

2. Method in accordance with Claim 1, characterised in that, the initialising line (IZ) is located, in the direction of vertical deflection, shortly before the beginning of the visible picture.

3. Method in accordance with Claim 2, characterised in that, the initialising line (IZ) is located above the visible image area (1) in the last grid line of the grid pattern as viewed in the direction of vertical deflection.

4. Method in accordance with Claim 1, 2 or 3, characterised in that, the correcting values for the initialising line (IZ) for each operating mode are stored in an individual store.

## Revendications

1. Procédé pour la correction d'image dans un téléviseur selon lequel des valeurs de correction pour les points d'intersection (K) d'une grille de lignes horizontales et verticales (SH, SV) sont enregistrées dans des mémoires, sachant que les points d'intersection (K) sont situés aux mêmes points spatiaux définis de la surface d'image visible (1), et ce pour plusieurs modes de fonctionnement ayant formats d'image et amplitudes de balayage vertical différents, procédé **caractérisé en ce que**,
pour chacun des modes de fonctionnement, des valeurs individuelles pour la correction du balayage sont déterminées et enregistrées pendant une ligne d'initialisation (IZ) située dans une zone autour du bord supérieur de la surface d'image visible (1),
et que lesdites valeurs de correction servent à compenser les écarts, différents d'un mode de fonctionnement à l'autre, des points d'intersection (K) par rapport à la position spatiale définie sur la surface d'image visible (1).

2. Procédé selon la revendication 1 **caractérisé en ce que** la ligne d'initialisation (IZ) vue dans le sens de balayage vertical, se situe juste avant le début de l'image visible.

3. Procédé selon la revendication 2 **caractérisé en ce que** ladite ligne d'initialisation (IZ) est située au niveau de la dernière ligne de ladite grille au-dessus de la surface d'image visible (1), vu dans le sens de balayage vertical.

4. Procédé selon l'une quelconque des revendications 1, 2 ou 3 **caractérisé en ce que** les valeurs de correction pour la ligne d'initialisation (IZ) sont enregistrées dans une mémoire individuelle pour chacun des modes de fonctionnement.
